(19)

Europäisches Patentamt

European Patent Office

Office européen des brevets

(11) **EP 4 518 532 A1**

(12) **EUROPEAN PATENT APPLICATION**
published in accordance with Art. 153(4) EPC

(43) Date of publication:
**05.03.2025 Bulletin 2025/10**

(21) Application number: **23796801.1**

(22) Date of filing: **26.04.2023**

(51) International Patent Classification (IPC):
*H04W 72/25* (2023.01)     *H04W 72/21* (2023.01)
*H04W 72/231* (2023.01)     *H04W 72/232* (2023.01)
*H04W 72/0457* (2023.01)     *H04W 74/08* (2024.01)
*H04L 1/18* (2023.01)     *H04W 92/18* (2009.01)

(52) Cooperative Patent Classification (CPC):
**H04L 1/18; H04W 72/0457; H04W 72/21;
H04W 72/231; H04W 72/232; H04W 72/25;
H04W 74/08; H04W 92/18**

(86) International application number:
**PCT/KR2023/005709**

(87) International publication number:
**WO 2023/211158 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.04.2022   US 202263335203 P**

(71) Applicant: **LG Electronics Inc.**
**Yeongdeungpo-gu**
**Seoul 07336 (KR)**

(72) Inventors:
• **LEE, Youngdae**
**Seoul 06772 (KR)**
• **SEO, Hanbyul**
**Seoul 06772 (KR)**
• **LEE, Seungmin**
**Seoul 06772 (KR)**
• **YANG, Suckchel**
**Seoul 06772 (KR)**
• **KIM, Seonwook**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING SIDELINK COMMUNICATION IN WIRELESS COMMUNICATION SYSTEM**

(57)     A method and a device for performing communication in a wireless communication system are disclosed. The method implemented by a first terminal, according to an embodiment of the present disclosure, comprises the steps of: receiving, from a base station, configuration information related to one or more resource block (RB) sets for sidelink (SL) transmission; and, on the basis of consistent SL listen before talk (LBT) failure being detected for a specific RB set among the one or more RB sets, transmitting a medium access control (MAC) control element (CE) related to the consistent SL LBT failure to the base station, wherein the MAC CE may contain information indicating that the consistent SL LBT failure has been detected for the specific RB set.

FIG.9

| RECEIVING CONFIGURATION INFORMATION RELATED TO AT LEAST ONE RB SET FOR SL TRANSMISSION FROM A BASE STATION | S910 |

| BASED ON A CONSISTENT SL LBT FAILURE BEING DETECTED FOR A SPECIFIC RB SET AMONG AT LEAST ONE RB SET, TRANSMITTING A MAC CE RELATED TO THE CONSISTENT SL LBT FAILURE TO THE BASE STATION | S920 |

**Description**

[TECHNICAL FIELD]

The present disclosure relates to a wireless communication system, and more particularly, to a method and device for performing sidelink communication in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing sidelink communication in a wireless communication system.

The technical problem of the present disclosure is to provide a method and device for detecting SL LBT in units of SL resource pool or/and RB set.

The technical problem of the present disclosure is to provide a method and device for reporting information related to consistent SL LBT failure when consistent SL LBT failure is triggered.

The technical problems to be achieved by the present disclosure are not limited to the above-described technical objects, and other technical problems which are not described herein will be clearly understood by those skilled in the pertinent art from the following description.

[Technical Solution]

According to one embodiment of the present disclosure, a method performed by a first user equipment (UE) in a wireless communication system may include receiving configuration information related to at least one resource block (RB) set for sidelink (SL) transmission from a base station; and based on a consistent SL LBT (listen before talk) failure being detected for a specific RB set among the at least one RB set, transmitting a MAC (medium access control) CE (control element) related to the consistent SL LBT failure to the base station, and the MAC CE may include information indicating that the consistent SL LBT failure was detected for the specific RB set.

According to one embodiment of the present disclosure, a method performed by a base station in a wireless communication system may include transmitting configuration information related to at least one resource block (RB) set for sidelink (SL) transmission to a first user equipment (UE); and based on a consistent SL LBT (listen before talk) failure being detected for a specific RB set among the at least one RB set, receiving a MAC (medium access control) CE (control element) related to the consistent SL LBT failure from the first UE, and the MAC CE may include information indicating that the consistent SL LBT failure was detected for the specific RB set.

[Technical Effects]

According to one embodiment of the present disclosure, a method and device for performing sidelink communication in a wireless communication system may be provided.

According to one embodiment of the present disclosure, a method and device for detecting SL LBT by SL resource pool or/and RB set units may be provided.

According to one embodiment of the present disclosure, a method and device for reporting information related to consistent SL LBT failure when a consistent SL LBT failure is triggered may be provided.

According to one embodiment of the present disclosure, by reporting a MAC CE indicating a resource pool/RB set where a SL LBT failure is detected/triggered to a base station, the base station can identify the resource where the SL LBT failure occurred in more detail.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a procedure for performing V2X or SL communication according to a transmission mode in a wireless communication system to which the present disclosure can be applied.

FIG. 8 illustrates a cast type for V2X or SL communication in a wireless communication system to which the present disclosure may be applied.

FIG. 9 is a diagram for explaining a process in which a first UE performs communication according to an embodiment of the present disclosure.

FIG. 10 is a diagram for explaining a process in which a base station performs communication according to an embodiment of the present disclosure.

FIG. 11 is a diagram for explaining a signaling procedure of a base station, a first UE, and a second UE according to an embodiment of the present disclosure.

FIG. 12 is a diagram for explaining a (SL) LBT failure MAC CE structure according to an embodiment of the present disclosure.

FIG. 13 is a block diagram for explaining a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214 (physical layer procedures for data), TS 38.300 (NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing

- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC (massive MTC), URLLC (Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

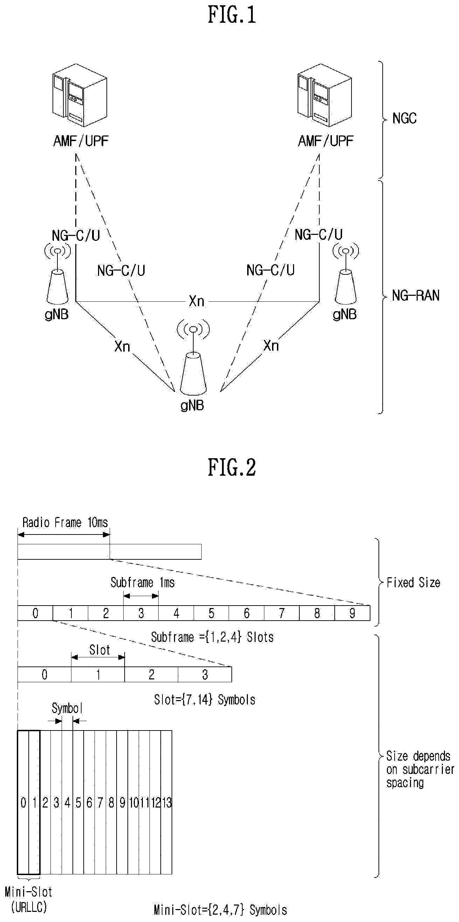

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu} - 1\}$ in a subframe and are numbered in an increasing order of $n_{s,f}^\mu \in \{0, ..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\ \mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

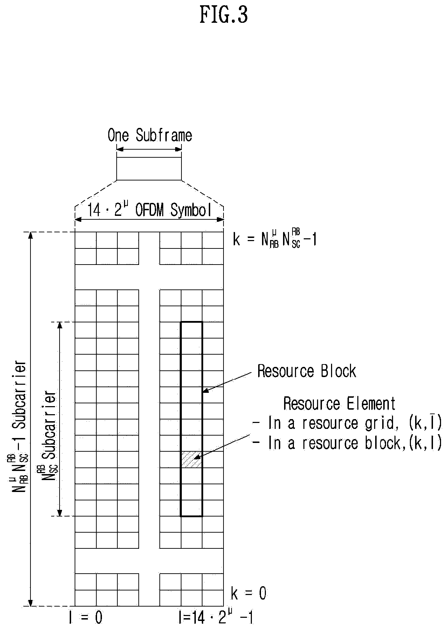

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}\mu\leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l').

Here, k=0,...,$N_{RB}^{\mu}N_{sc}^{RB}$-1 is an index in a frequency domain and l'=0, ... , $2^{\mu}N_{symb}^{(\mu)}$-1 refers to a position of a symbol in a subframe. When referring to a resource element in a slot, an index pair (k,l) is used. Here, l=0, ...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

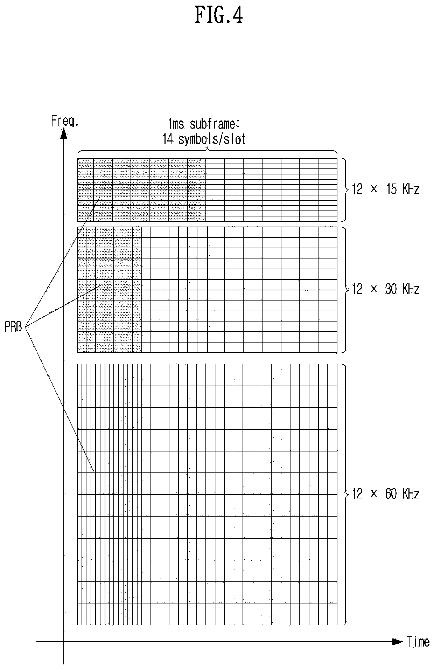

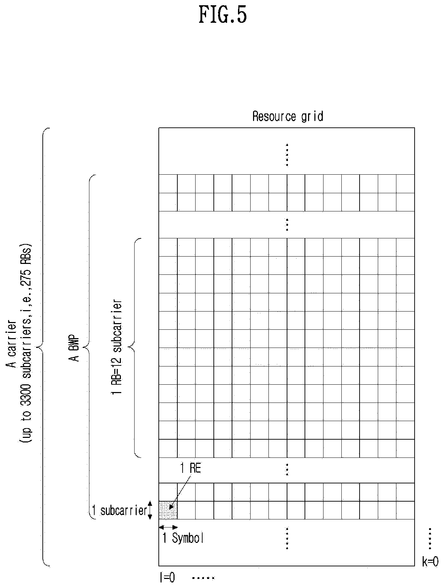

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

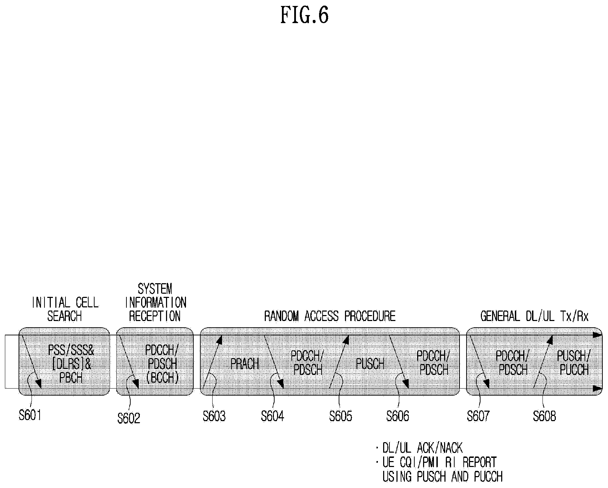

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel) /PUCCH (physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL (Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information **(e.g.,** frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

V2X (vehicle-to-everything)/side link (SL: sidelink) communication

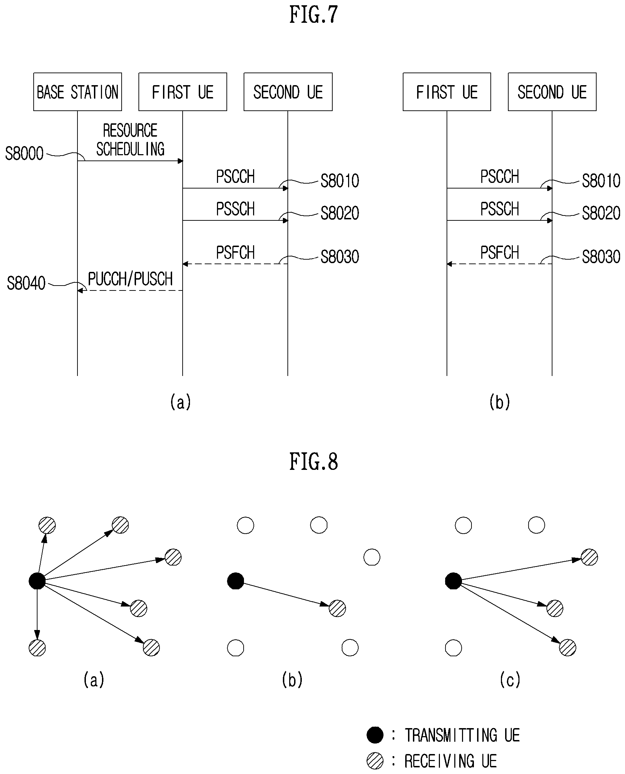

FIG. 7 illustrates a procedure for performing V2X or SL communication according to a transmission mode in a wireless communication system to which the present disclosure may be applied.

The embodiment of FIG. 7 may be combined with various embodiments of the present disclosure. In various embodiments of the present disclosure, the transmission mode may be referred to as a mode or a resource allocation mode. Hereinafter, for convenience of explanation, the transmission mode in LTE may be referred to as an LTE transmission mode, and the transmission mode in NR may be referred to as an NR resource allocation mode.

For example, FIG. 7(a) illustrates the operation of a UE related to LTE transmission mode 1 or LTE transmission mode 3. Alternatively, for example, FIG. 7(a) illustrates the operation of a UE related to NR resource allocation mode 1. For example, LTE transmission mode 1 may be applied to general SL communication, and LTE transmission mode 3 may be applied to V2X communication.

For example, Fig. 7(b) illustrates the operation of a UE associated with LTE transmission mode 2 or LTE transmission mode 4. Alternatively, for example, Fig. 7(b) illustrates the operation of a UE associated with NR resource allocation mode 2.

Referring to FIG. 7(a), in LTE transmission mode 1, LTE transmission mode 3, or NR resource allocation mode 1, the base station may schedule SL resources to be used by the UE for SL transmission (S8000). For example, the base station may transmit information related to SL resources and/or information related to UL resources to the first UE. For example, the UL resources may include PUCCH resources and/or PUSCH resources. For example, the UL resources may be resources for reporting SL HARQ feedback to the base station.

For example, the first UE may receive information related to a dynamic grant (DG) resource and/or information related to a configured grant (CG) resource from the base station. For example, the CG resource may include a CG type 1 resource or a CG type 2 resource. In the present disclosure, the DG resource may be a resource that the base station configures/allocates to the first UE via DCI. In the present disclosure, the CG resource may be a (periodic) resource that the base station configures/allocates to the first UE via DCI and/or an RRC message. For example, in the case of a CG type 1 resource, the base station may transmit an RRC message including information related to the CG resource to the first UE. For example, in the case of a CG type 2 resource, the base station may transmit an RRC message including information related to the CG resource to the first UE, and the base station may transmit DCI related to activation or release of the CG resource to the first UE.

The first UE may transmit PSCCH (e.g., Sidelink Control Information (SCI) or 1st-stage SCI) to the second UE based on the resource scheduling (S8010).

The first UE may transmit a PSSCH (e.g., a 2nd-stage SCI, a MAC protocol data unit (PDU), data, etc.) related to the PSCCH to the second UE (S8020).

The first UE may receive a PSFCH related to the PSCCH/PSSCH from the second UE (S8030). For example, HARQ feedback information (e.g., NACK information or ACK information) can be received from the second UE via the PSFCH.

The first UE may transmit/report HARQ feedback information to the base station via PUCCH or PUSCH (S8040). For example, the HARQ feedback information reported to the base station may be information generated by the first UE based on HARQ feedback information received from the second UE. For example, the HARQ feedback information reported to the base station may be information generated by the first UE based on a rule set in advance. For example, the DCI may be DCI for scheduling of SL. For example, the format of the DCI may be DCI format 3_0 or DCI format 3_1.

Referring to FIG. 7(b), in LTE transmission mode 2, LTE transmission mode 4 or NR resource allocation mode 2, the UE may determine SL transmission resources within SL resources set by the base station/network or preset SL resources. For example, the set SL resources or preconfigured SL resources may be a resource pool. For example, the UE may autonomously select or schedule resources for SL transmission. For example, the UE may perform SL communication by selecting resources by itself within the configured resource pool. For example, the UE may perform sensing and resource (re)selection procedures to select resources by itself within a selection window. For example, the sensing may be performed on a sub-channel basis.

A first UE that has selected a resource within a resource pool may transmit a PSCCH (e.g., SCI or 1st-stage SCI) to a second UE using the resource (S8010).

The first UE may transmit a PSSCH (e.g., 2nd-stage SCI, MAC PDU, data, etc.) related to the PSCCH to the second UE (S8020).

The first UE may receive a PSFCH related to PSCCH/PSSCH from the second UE (S8030).

Referring to FIG. 7(a) or FIG. 7(b), for example, a first UE may transmit an SCI to a second UE on a PSCCH. Or, for example, the first UE may transmit two consecutive SCIs (e.g., 2-stage SCIs) to the second UE on the PSCCH and/or the PSSCH. In this case, the second UE may decode the two consecutive SCIs (e.g., 2-stage SCIs) to receive the PSSCH from the first UE. In the present disclosure, the SCI transmitted on the PSCCH may be referred to as a first (1st) SCI, a first SCI, a first-stage SCI, or a 1st-stage SCI format, and the SCI transmitted on the PSSCH may be referred to as a second (2nd) SCI, a second SCI, a second-stage SCI, or a 2nd-stage SCI format. For example, a 1st-stage SCI format may include SCI format 1-A, and a 2nd-stage SCI format may include SCI format 2-A and/or SCI format 2-B.

Referring to FIG. 7(a) or FIG. 7(b), in step S8030, the first UE may receive the PSFCH based on the description to be described below. For example, the first UE and the second UE may determine the PSFCH resource based on the description to be described below, and the second UE may transmit the HARQ feedback to the first UE using the PSFCH resource.

Describes the UE procedure for reporting HARQ-ACK on sidelink as specified in TS 38.213.

The UE may be indicated to transmit a PSFCH including HARQ-ACK information in response to the PSSCH reception by the SCI format scheduling the PSSCH reception. The UE provides HARQ-ACK information including ACK or NACK or only NACK.

The UE may be provided with a number of slots within the resource pool during a period of PSFCH transmission occasion resources by sl-PSFCH-Period. If the number of slots is 0, the PSFCH transmission of the UE within the resource pool is disabled.

The UE expects that slot $t'^{SL}_k$ ($0 \leq k < T'_{max}$) includes PSFCH transmission occasion resources if $k \bmod N^{PSFCH}_{PSSCH} = 0$, where $t'^{SL}_k$ is defined in TS 38.214, $T'_{max}$ is the number of slots belonging to the resource pool within 10240 msec according to TS 38.214, and $N^{PSFCH}_{PSSCH}$ is provided by sl-PSFCH-Period.

The UE may be indicated by higher layers not to transmit a PSFCH containing HARQ-ACK information in response to receiving a PSSCH.

When a UE receives a PSSCH from a resource pool and the HARQ feedback enabled/disabled indicator field of the associated SCI format 2-A/2-B/2-C has value 1, the UE provides HARQ-ACK information in a PSFCH transmission from the resource pool. The UE transmits the PSFCH in the first slot that includes PSFCH resources and that corresponds to at least a number of slots provided by sl-MinTimeGapPSFCH of the resource pool after the last slot of the PSSCH reception.

The UE may be provided with a set of $M^{PSFCH}_{PRB,set}$ PRBs in the resource pool for PSFCH transmission including HARQ-ACK information in the physical resource block (PRB) of the resource pool by sl-PSFCH-RB-Set. The UE may be provided with a set of $M^{PSFCH}_{PRB,set}$ PRBs in the resource pool by sl-RB-SetPSFCH for PSFCH transmission including conflict information in the PRB of the resource pool. The UE expects that different PRBs are (pre-)set for conflict information and HARQ-ACK information. For the number of $N_{SUBCH}$ sub-channels for the resource pool provided by sl-NumSubchannel and the number of PSSCH slots associated with PSFCH slots less than or equal to $N^{PSFCH}_{PSSCH}$, the UE allocates $[(i+j N^{PSFCH}_{PSSCH}) M^{PSFCH}_{subch,slot} (i+1+j N^{PSFCH}_{PSSCH}) M^{PSFCH}_{subch,slot}-1]$ PRBs from $M^{PSFCH}_{PRB,set}$ PRBs among the PSFCH slots and PSSCH slots associated with sub-channel j to slot i. Here, $M^{PSECH}_{subch,slot}=M^{PSFCH}_{PPB,set}/(N_{subch} N^{PSFCH}_{PSSCH})$, $0 \leq i < N^{PSFCH}_{PSSCH}$, $0 \leq j < N_{subch}$, and the allocation starts in ascending order of i and continues in ascending order of j. The UE expects $M^{PSFCH}_{PRB,set}$ to be a multiple of $N_{subch} \cdot N^{PSFCH}_{PSSCH}$.

The UE determines the number of available PSFCH resources for multiplexing HARQ-ACK or conflict information in PSFCH transmission based on the indication by sl-PSFCH-CandidateResourceType as $R^{PSFCH}_{PRB,CS}=N^{PSFCH}_{type} \cdot M^{PSFCH}_{subch,slot} \cdot N^{PSFCH}_{CS}$, where $N^{PSFCH}_{CS}$ is the number of cyclic shift pairs for the resource pool provided by sl-NumMuxCS-Pair.

- When sl-PSFCH-CandidateResourceType is set to startSubCH, $N^{PSFCH}_{type}=1$, and $M^{PSFCH}_{subch,slot}$ PRBs are associated with the start sub-channel of the corresponding PSSCH.
- When sl-PSFCH-CandidateResourceType is set to allocSubCH, $N^{PSFCH}_{type}=N^{PSSCH}_{subch}$, and $N^{PSSCH}_{subch} \cdot M^{PSFCH}_{subch,slot}$ PRBs are associated with $N^{PSSCH}_{subch}$ sub-channels of the corresponding PSSCH.
- For conflict information, the corresponding PSSCH is determined based on sl-PSFCH-Occasion.

PSFCH resources are first indexed from $N^{PSFCH}_{type} \cdot M^{PSFCH}_{subch,slot}$ PRBs in ascending order of PRB index, and then from $N^{PSFCH}_{CS}$ cyclic shift pairs in ascending order of cyclic shift pair index.

The UE determines the index of the PSFCH resource for transmitting the PSFCH including HARQ-ACK information or conflict information in response to the PSSCH reception, which corresponds to the reserved resource, as $(P_{ID}+M_{ID}) \bmod R^{PSECH}_{PRB,CS}$. Here, $P_{ID}$ is a physical layer source identifier provided by SCI format 2-A/2-B/2-C that schedules PSSCH reception or SCI format 2-A/2-B/2-C that reserves resources for conflict information to be provided from other UEs. For HARQ-ACK information, if the UE detects SCI format 2-A having a cast type indicator field value of "01", $M_{ID}$ is an identifier of the UE that receives the PSSCH indicated by the upper layer, otherwise $M_{ID}$ is 0. For conflict information, $M_{ID}$ is 0.

For PSFCH transmission including HARQ-ACK information or conflict information, the UE determines the value $m_0$ from the cyclic shift pair index corresponding to the PSFCH resource index and from $N^{PSFCH}_{CS}$ using Table 6 below to calculate the value $\alpha$ of the cyclic shift.

Table 6 illustrates a set of cyclic shift pairs.

[Table 6]

| $N_{CS}^{PSFCH}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

For PSFCH transmission including HARQ-ACK information, the UE determines a $m_{cs}$ value as shown in Table 7 below if the UE detects an SCI format 2-A or SCI format 2-C having a cast type indicator field value of "01" or "10" to calculate the value $\alpha$ of the cyclic shift, and determines an $m_{cs}$ value as shown in Table 8 below if the UE detects an SCI format 2-B or 2-A having a cast type indicator field value of "11". For PSFCH transmission including conflict information, the UE determines an $m_{cs}$ value as shown in Table 9 below to calculate the value $\alpha$ of the cyclic shift. The UE applies one cyclic shift from a cyclic shift pair to a sequence used for PSFCH transmission. Table 7 illustrates the mapping of cyclic shifts of a sequence for PSFCH transmission from a cyclic shift pair and HARQ-ACK information bit values when the HARQ-ACK information includes ACK or NACK.

[Table 7]

| HARQ-ACK value | 0 (NACK) | 1 (ACK) |
|---|---|---|
| Sequency cyclic shift | 0 | 6 |

Table 8 illustrates the mapping of cyclic shifts of a sequence for PSFCH transmission from a cyclic shift pair and HARQ-ACK information bit values when HARQ-ACK information contains only NACK.

[Table 8]

| HARQ-ACK value | 0 (NACK) | 1 (ACK) |
|---|---|---|
| Sequency cyclic shift | 0 | N/A |

Table 9 illustrates the mapping of the cyclic shift of a sequence for PSFCH transmission and the value of the conflict information bit from a cyclic shift pair.

[Table 9]

| Conflict information | Conflict information for the next time-reserved resource within SCI |
|---|---|
| Sequence cyclic shift | 0 |

FIG. 8 illustrates a cast type for V2X or SL communication in a wireless communication system to which the present disclosure may be applied. The embodiment of FIG. 8 may be combined with various embodiments of the present disclosure. Referring to FIG. 8, FIG. 8(a) represents a broadcast type SL communication, FIG. 8(b) represents a unicast type SL communication, and FIG. 8(c) represents a group-cast type SL communication. In the case of a unicast type SL communication, a UE can perform one-to-one communication with another UE. In the case of a group-cast type SL communication, a UE may perform SL communication with one or more UEs within the group to which it belongs. In various embodiments of the present disclosure, SL group-cast communication may be referred to as SL multicast communication, SL one-to-many communication, etc.

Hereinafter, the HARQ (Hybrid Automatic Repeat Request) procedure is described.

For example, SL HARQ feedback may be enabled for unicast. In this case, in non-Code Block Group (CBG) operation, if a receiving UE decodes a PSCCH targeting the receiving UE and the receiving UE successfully decodes a transport block associated with the PSCCH, the receiving UE may generate an ACK. Then, the receiving UE may transmit the HARQ-ACK to the transmitting UE. On the other hand, if the receiving UE fails to successfully decode a transport block associated with the PSCCH after the receiving UE decodes the PSCCH targeting the receiving UE, the receiving UE may generate a NACK. Then, the receiving UE may transmit the NACK to the transmitting UE.

Also, for example, SL HARQ feedback may be enabled for group-cast. For example, in non-CBG operation, two HARQ feedback options may be supported for group-cast.

(1) group-cast option 1: If the receiving UE fails to decode a transport associated with the PSCCH after the receiving UE decodes the PSCCH targeting the receiving UE, the receiving UE may transmit a NACK to the transmitting UE via the PSFCH. On the other hand, if the receiving UE decodes the PSCCH targeting the receiving UE and the receiving UE successfully decodes the transport block associated with the PSCCH, the receiving UE may not transmit an ACK to the transmitting UE.

(2) Group-cast option 2: If the receiving UE fails to decode a transport block associated with the PSCCH after the receiving UE decodes the PSCCH targeting the receiving UE, the receiving UE may transmit a NACK to the transmitting UE via the PSFCH. Then, if the receiving UE decodes the PSCCH targeting the receiving UE and the receiving UE successfully decodes the transport block associated with the PSCCH, the receiving UE may transmit an ACK to the transmitting UE via the PSFCH.

For example, if group-cast option 1 is used for SL HARQ feedback, all UEs performing group-cast communication may share PSFCH resources. For example, UEs belonging to the same group may transmit HARQ feedback using the same PSFCH resources.

For example, if group-cast option 2 is used for SL HARQ feedback, each UE performing group-cast communication may use different PSFCH resources for HARQ feedback transmission. For example, UEs belonging to the same group may transmit HARQ feedback using different PSFCH resources.

In the present disclosure, ACK may be referred to as HARQ-ACK, ACK information, or positive-ACK information, and NACK may be referred to as HARQ-NACK, NACK information, or negative-ACK information.

Sidelink grants may be semi-persistently configured by RRC or received dynamically on the PDCCH, which is autonomously selected by the MAC entity. The MAC entity may have a sidelink grant on the active SL BWP to determine the set of PSCCH periods in which SCI transmissions occur and the set of PSSCH periods in which SL-SCH transmissions associated with SCI occur.

When the MAC entity is configured to sidelink resource allocation mode 1, the MAC entity may perform actions based on each PDCCH occasion and each grant received for that PDCCH occasion.

UE/Base Station Behavior for consistent LBT Failures in SL Transmission

NR Unlicensed Spectrum (NR-U) refers to a mode that provides the technology necessary for cellular operators to integrate unlicensed spectrum into their wireless communication systems. NR-U may enable both uplink and downlink operations in unlicensed spectrum.

In NR-U, channel access for uplink and downlink relies on LBT functionality. The UE and/or base station may first sense the communication channel to determine if there is no communication before transmission. If the communication channel is a wideband unlicensed carrier, the channel sensing procedure of NR-U may rely on sensing energy levels in multiple subbands of the communication channel. The base station may configure LBT parameters (e.g., type/duration, clear channel assessment parameters, etc.) for the UE.

In NR-U, a UE may determine the time and location of transmission and reception based on the indications of the COT (Channel Occupancy Time) structure. The COT consists of multiple slots, and each slot may consist of downlink resources, uplink resources, or flexible resources.

In an NR-U system, both contiguous and interlaced uplink resource allocations may be supported while complying with the regulations. In interlace uplink resource allocation, the basic unit of resource allocation for an NR unlicensed channel may be an interlace. For example, a single interlace may consist of ten equally spaced resource blocks within a 20 MHz frequency bandwidth for a 15 kHz subcarrier spacing.

For NR-U, the physical layer may perform the LBT procedure. The LBT procedure means a procedure in which transmission is not performed when the channel is determined to be occupied. If the channel is identified as occupied according to the LBT procedure, transmission may not be performed by the physical layer. If the physical layer performs the LBT procedure before transmission and transmission is not performed, the physical layer may transmit an LBT failure indication to the MAC entity.

Unless otherwise specified, the operations specified in the present disclosure may be performed regardless of whether an LBT failure indication is received from the physical layer when an LBT procedure is performed for transmission. If the physical layer does not perform LBT, an LBT failure indication may not be received from the physical layer.

SR(Scheduling Request) may be triggered by LBT(Listen Before Talk) failure in UL transmission.

Here, the MAC entity may:

1> if consistent LBT failure is triggered and not cancelled in SpCell; and
1> if UL-SCH resources are available for new transmission in SpCell and these UL-SCH resources can accommodate LBT failure MAC CE and its subheader as a result of logical channel priority:

    2> indicate multiplexing and assembly procedure to generate LBT failure MAC CE.

1> if consistent LBT failure is triggered and not cancelled in at least one SCell:

    2> if UL-SCH resources are available for new transmission in serving cell where consistent LBT failure is not triggered and these UL-SCH resources can accommodate LBT failure MAC CE and its subheader as a result of logical channel priority:

        3> indicate multiplexing and assembly procedure to generate LBT failure MAC CE

    2> otherwise:

        3> trigger scheduling request for LBT failure MAC CE.

When SL transmission is supported in an unlicensed band, the UE may perform LBT for SL transmission. Here, LBT failure can occur not only in UL transmission but also in SL transmission. Therefore, when SL mode 1 is configured, the gNB may need to know whether LBT failure occurs for SL transmission. However, there is a problem that LBT failure reporting for SL transmission is not supported in basic wireless communication systems.

Hereinafter, a method for a UE to report LBT failures to a base station when consistent LBT failures occur for SL transmissions in an unlicensed band is described.

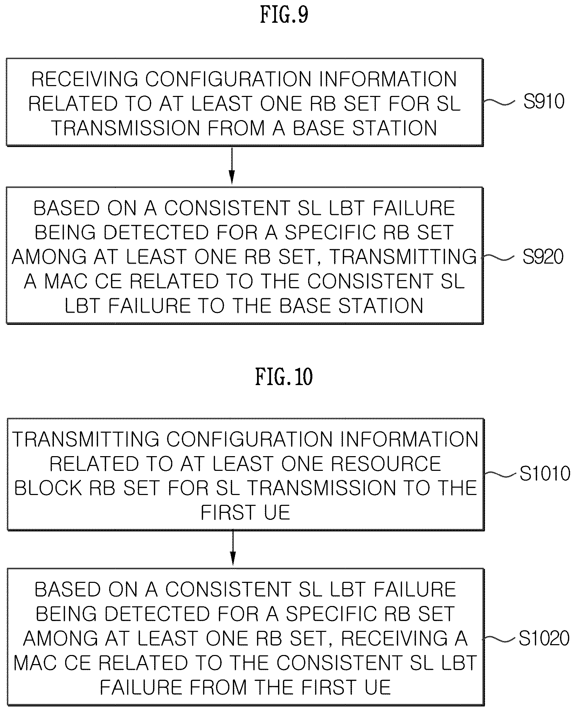

In FIG. 9, for convenience of explanation, the sidelink Tx (transmission) UE is referred to as the first UE, and the sidelink Rx (reception) UE is referred to as the second UE. In addition, in FIG. 9, the sidelink operation between the first UE and the second UE may operate in an unlicensed band/spectrum or a shared spectrum.

FIG. 9 is a diagram for explaining a process in which a first UE performs communication according to one embodiment of the present disclosure.

A first user equipment (UE) may receive configuration information related to at least one resource block (RB) set for sidelink (SL) transmission from a base station (S910).

For example, the configuration information associated with at least one RB set may include the number of RBs in at least one resource pool (configured by the base station), the lowest RB index of the lowest indexed subchannel within the resource pool, the number of RBs per RB set, etc.

Additionally or alternatively, the first UE may receive from the base station configuration information related to an SL resource allocation mode, configuration information related to one or more SL resource pools, configuration information related to an SL RLC bearer, etc.

For example, the configuration information transmitted to the first UE may be included in upper layer signaling (e.g., RRC, SIB, etc.).

Based on a consistent SL LBT failure being detected for a specific RB set among at least one RB set, the first UE may transmit a MAC CE related to the consistent SL LBT failure to the base station (S920).

Additionally or alternatively, based on a consistent SL LBT failure being detected for a specific resource pool among at least one resource pool, the first UE may transmit a MAC CE related to the consistent SL LBT failure to the base station.

Specifically, the first UE may detect/trigger an LBT failure for a specific RB set or a specific resource pool among at least one resource pool/RB set. Accordingly, the first UE may report a (SL LBT failure) MAC CE to the base station. The (SL LBT failure) MAC CE may include information indicating that a consistent SL LBT failure has been detected for the specific RB set/the specific resource pool.

Additionally or alternatively, the (SL LBT Failure) MAC CE may include information indicating at least one of the cell or SL BWP in which a consistent SL LBT failure was detected.

For example, the first UE may transmit to the base station information for separate SL LBT failure reporting for the RB set, SL BWP, resource pool, or/and cell where (consistent) SL LBT failure occurred. Each of the LBT failure MAC CE in uplink and the new SL LBT failure MAC CE may be distinguished by different LCID values in the sub-header of the MAC PDU containing the corresponding MAC CE.

That is, the LCID corresponding to the sub-header of the MAC PDU including the MAC CE associated with the consistent SL LBT failure may be different from the LCID value corresponding to the sub-header of the MAC PDU including the MAC CE associated with the LBT failure in the uplink.

SL LBT failures reported to the base station may be associated with SR resources. For example, if SL LBT failures are detected N or more times, the first UE may report this to the base station.

Additionally or alternatively, upon detection of SL LBT failure, the first UE may trigger an LBT failure MAC CE reporting UL LBT failure. At this time, the LBT failure MAC CE may report LBT failure for the cell where UL or SL LBT failure occurred (regardless of SL and UL).

Additionally or alternatively, based on a consistent SL LBT failure being detected for a specific RB set among at least one RB set, the first UE may transmit a physical uplink control channel (PUCCH) including SL HARQ-ACK information indicating a negative acknowledgement (NACK) and information indicating that the NACK is generated/-caused by consistent SL LBT to the base station.

Here, based on the SL resource allocation mode 1 being configured for the first UE, the first UE m ay transmit to the base station a PUCCH including the NACK and information indicating that the NACK is generated/caused by consistent SL LBT. Here, the NACK may be for a specific TB. That is, the first UE may report SL HARQ-ACK to the base station through the PUCCH only for a specific TB.

A PUCCH with SL HARQ-HARQ may include information indicating whether a reported NACK was caused by an LBT failure (i.e., information indicating whether a PUSCCH transmission was not performed due to an LBT failure) and/or information indicating N consecutive LBT failures detected for an SL transmission.

For example, based on the collision of PUCCH and SL transmissions, the first UE may drop the SL transmission and transmit the PUCCH to the base station. Then, based on the SR (scheduling request) for MAC CE being triggered, the first UE may transmit the PUCCH allocated for the SR to the base station.

Additionally or alternatively, the UE may receive an RRC (radio resource control) reconfiguration message from the base station to configure a new RB set/resource pool. Accordingly, the first UE may change the RB set/resource pool for SL communication from a specific RB set/specific resource pool to a new RB set/new resource pool.

Additionally or alternatively, upon receiving a DCI (e.g., DCI format 3_x (where x is an integer greater than or equal to 0)) and/or MAC CE from the base station indicating a new RB set/new resource pool, the first UE may change the RB set/resource pool for SL communication from a specific RB set/specific resource pool to the new RB set/specific resource pool.

Additionally or alternatively, the first UE may autonomously change the RB set/resource pool for SL communication from a specific RB set/specific resource pool to a new RB set/new resource pool. For example, the first UE may change the RB set for SL communication from a specific RB set to a default RB set configured by the base station or to the SL RB set of the initial SL BWP associated with the initial UL BWP.

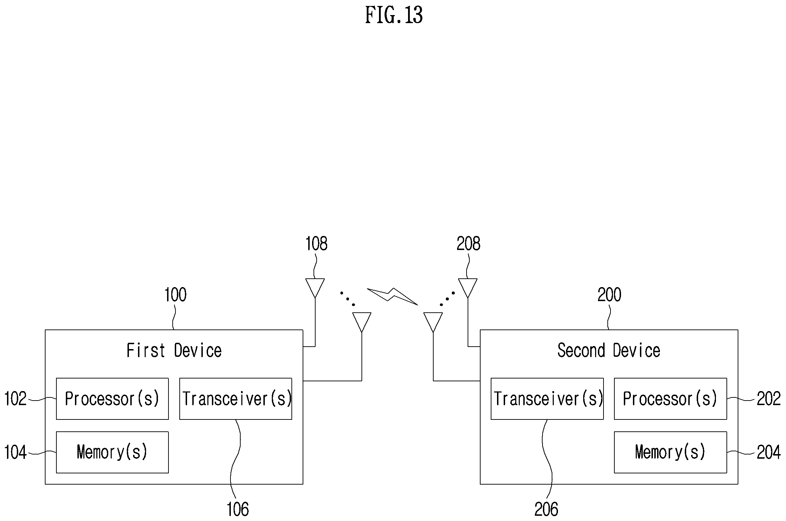

The method performed by the first UE described in the example of FIG. 9 may be performed by the first device (100) of FIG. 13.

For example, one or more processors (102) of the first device (100) of FIG. 13 may be configured to receive configuration information related to at least one RB set for SL transmission from a base station through one or more transceivers (106). The one or more processors (102) may be configured to transmit a MAC CE related to the consistent SL LBT failure to the base station through one or more transceivers (106) based on detecting a consistent SL LBT failure for a specific RB set among the at least one RB set.

Furthermore, one or more memories (104) of the first device (100) may store instructions for performing the method described in the example of FIG. 9 when executed by one or more processors (102).

FIG. 10 is a diagram for explaining a process in which a base station performs communication according to one embodiment of the present disclosure.

The base station may transmit configuration information related to at least one resource block RB set for SL transmission to the first UE (S1010).

The configuration information transmitted from the base station to the first UE has been specifically described with reference to FIG. 9, so any redundant description will be omitted.

Based on a consistent SL LBT failure being detected for a specific RB set among at least one RB set, the base station may receive a MAC CE related to the consistent SL LBT failure from the first UE (S1020).

Additionally or alternatively, based on a consistent SL LBT failure being detected for a particular resource pool among at least one resource pool, the base station may receive a MAC CE related to the consistent SL LBT failure from the first terminal.

The base station may identify that the SL LBT failure is detected/triggered for a specific RB set/specific resource pool through MAC CE related to consistent SL LBT failure. The base station may transmit an RRC reconfiguration message/DCI/DL MAC CE to the first UE so that the first UE may perform SL communication by changing from the specific RB set/specific resource pool to a new RB set/new resource pool.

The method performed by the base station described in the example of FIG. 10 can be performed by the second device (200) of FIG. 13.

For example, one or more processors (202) of the second device (200) of FIG. 13 may be configured to transmit configuration information related to at least one resource block RB set for SL transmission to the first terminal via one or more transceivers (206). The one or more processors (202) may be configured to receive a MAC CE related to a consistent SL LBT failure from the first terminal via one or more transceivers (206) based on detection of a consistent SL LBT failure for a specific RB set among the at least one RB set.

Furthermore, one or more memories (204) of the second device (200) may store instructions for performing the method described in the example of FIG. 10 when executed by one or more processors (202).

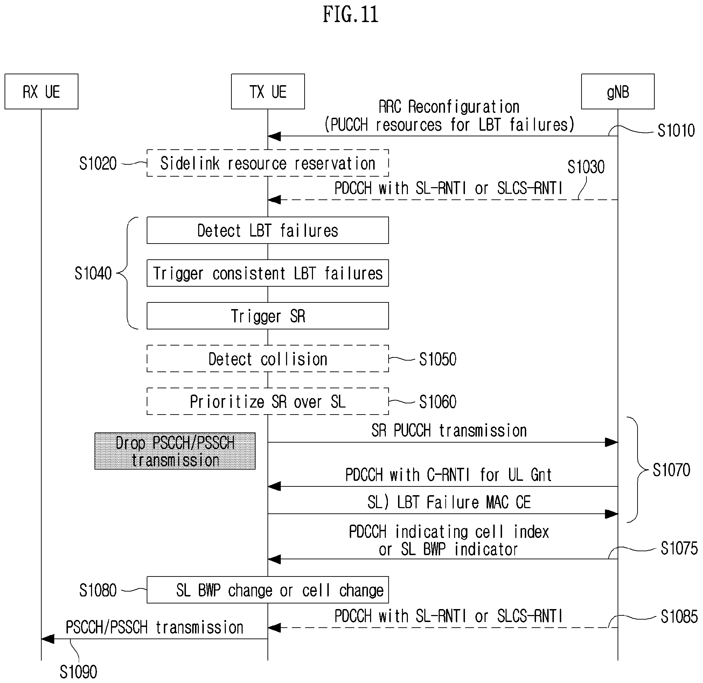

FIG. 11 is a diagram illustrating a method for reporting consistent SL LBT failure according to one embodiment of the present disclosure.

The example of FIG. 11 is for convenience of explanation and does not limit the scope of the present disclosure. Some of the step(s) illustrated in FIG. 11 may be omitted depending on the situation and/or setting. In addition, the Tx terminal/Rx terminal/base station in FIG. 11 is only an example and may be implemented with the device illustrated in FIG. 13 below.

For example, the processor (102/202) of Fig. 13 may control to transmit and receive channels/signals/data/information, etc. using the transceiver (106/206). In addition, the processor (102/202) of FIG. 13 can control to store channels/signals/data/information, etc. to be transmitted, in the memory (104/204), and can also control to store received channels/signals/data/information, etc., in the memory (104/204).

The base station may transmit configuration information to the transmitting UE via an RRC message (S1010). Here, the configuration information may include information related to PUCCH resources for (SL) LBT failure, information related to SL resource allocation mode, and/or information related to SL resource pool.

For sidelink resource allocation mode 2, a transmitting UE may reserve sidelink resources (S1020). The transmitting UE may perform sidelink transmission using the reserved resources.

In the case of sidelink resource allocation mode 1, the transmitting UE may monitor the PDCCH (S1030). If a DCI with CRC scrambled by SL-RNTI or SLCS-RNTI is received from the base station through the PDCCH, the transmitting UE may allocate sidelink resources according to the DCI. The transmitting UE may perform SL transmission using one of the resources received in the SL BWP of the cell. The transmitting UE may perform UL transmission on the UL BWP of the same cell. The SL BWP and the UL BWP may overlap in frequency in the same cell, but may not overlap in time.

That is, the transmitting UE may selectively perform the operation according to step S1020 and the operation according to step S1030 depending on the sidelink resource allocation mode.

For sidelink transmission in an unlicensed band, the physical layer (i.e., L1) of a transmitting UE may perform a channel access procedure. The transmitting UE may access a channel on which SL or UL transmission(s) are performed according to either a Type 1 or Type 2 UL channel access procedure. In the channel access procedure, if the physical layer of the transmitting terminal fails to access the channel(s) prior to the intended UL or SL transmission to the base station, the physical layer may notify the MAC layer of a channel access failure (i.e., LBT failure).

For SL (re)transmission of TB on SL resource according to SL mode 1 (or SL mode 2), if the physical layer of the transmitting UE notifies the MAC layer of LBT failure for SL transmission of TB, and if the PUCCH resource is configured with SL mode 1, the transmitting UE may transmit 'NACK' to the base station through PUCCH for reporting SL HARQ-ACK information.

That is, if a transmitting UE fails to transmit SL (re)transmission of TB, the UE may transmit 'NACK' to the base station via PUCCH using the PUCCH resource allocated to report SL HARQ-ACK information even if it does not receive SL HARQ feedback.

PUCCH resources may be associated with SL resources used for SL transmission of TB (e.g., in terms of HARQ process ID of TB). UCI of PUCCH may indicate whether the reported NACK is caused by LBT failure (i.e., PSSCH is not transmitted due to LBT failure).

For example, the two bits on PUCCH format 0 or PUCCH format 1, respectively, may indicate a first HARQ-ACK bit indicating a NACK and a second HARQ-ACK bit indicating that the reported NACK is caused by an LBT failure.

Additionally or alternatively, the transmitting UE may report the HARQ process ID (and the NDI value of TB) as well as the NACK in the UCI of the PUCCH. The reported HARQ process ID may be the HARQ process ID used by the base station to schedule SL resources (e.g., in the DCI) or the HARQ process ID indicated in the SCI that schedules the SL resources.

Additionally or alternatively, the PUCCH may include CG-UCI information including COT sharing that the base station may use.

Additionally or alternatively, if a transmitting UE fails to transmit an SL (re)transmission of a TB (e.g., because the maximum number of TBs has been reached) or if the transmitting UE fails to transmit a TB, the transmitting UE m ay transmit a PUCCH to the base station by triggering an SR if a dedicated SR PUCCH resource may be configured by the base station for this purpose.

Additionally or alternatively, if a transmitting terminal fails to transmit SL (re)transmission of a TB with SL HARQ feedback enabled and SL transmission of a TB fails due to LBT failure, the options described below may be applied.

Option 1: The transmitting UE may not transmit the PUCCH allocated to report SL HARQ feedback to the TB. The base station may detect DTX in the PUCCH transmission. The DTX may indicate no TX (i.e., no transmission performed) due to LBT error.

Option 2: The transmitting UE may transmit NACK over the allocated PUCCH to report SL HARQ feedback to the TB whose SL transmission failed due to LBT failure.

Option 3: The transmitting UE may indicate 'LBT failure' on the PUCCH allocated to report SL HARQ feedback to the TB whose SL transmission failed due to LBT failure.

The transmitting UE may trigger a consistent LBT failure and trigger SR by detecting an LBT failure (S1040).

Specifically, a consistent LBT failure recovery procedure for the MAC entity of the transmitting UE may be established by the RRC. If the physical layer of the transmitting UE fails to access the channel(s) prior to the UL or SL transmission intended by the base station, the physical layer may notify the MAC layer of the channel access failure (i.e., LBT failure). The transmitting UE may detect consistent LBT failure on a per-SL BWP, per-UL BWP, or per-serving cell basis by counting LBT failure indications for all SL transmissions and/or all UL transmissions from the physical layer to the MAC entity based on one of the embodiments described below.

In the following, unless otherwise specified, the term terminal may mean a transmitting terminal.

Embodiment 1: Integrated UL/SL LBT failure detection and recovery procedure

The UE may count LBT_COUNTER based on LBT failure for both UL transmission via UL BWP and SL transmission via SL BWP for each serving cell. LBT failure MAC CE may be generated and shared for LBT failure in both UL and SL. SR (scheduling request) may be triggered and shared for LBT failure in both UL and SL. SR configuration and resource(s) may be common for both UL LBT failure reporting and SL LBT failure reporting. Parameters of 'lbt-FailureRecoveryConfig' (e.g., 'lbt-FailureInstanceMaxCount' and 'lbt-FailureDetectionTimer') may be shared between UL and SL, and may be configured by RRC.

A consistent LBT failure recovery procedure for the MAC entity of the UE may be established by RRC. Consistent LBT failure per UL BWP, per SL BWP, or per BWP overlapping a UL BWP and an SL BWP may be detected by counting LBT failure indications for all UL transmissions and/or all SL transmissions from the lower layer (i.e., the physical layer) to the MAC entity.

LBT_COUNTER (per serving cell) may be used for consistent LBT failure detection procedure. The LBT_COUNTER is a counter for LBT failure indications that is initially set to 0. For each serving cell, LBT_COUNTER may be used to count LBT failure indications for UL transmissions only for the UL BWP of the serving cell, or LBT failure indications for SL transmissions only for the SL BWP of the serving cell, or both LBT failure indications for UL transmissions and LBT failure indications for SL transmissions for both the UL BWP and SL BWP of the serving cell.

For each activated serving cell configured with 'lbt-FailureRecoveryConfig', the MAC entity of the UE may perform the following actions:

> 1> if LBT failure indication has been received from lower layers:

>> 2> start or restart lbt-FailureDetectionTimer;
>> 2> increment LBT_COUNTER by 1;
>> 2> if LBT_COUNTER >= lbt-FailureInstanceMaxCount:

>>> 3> trigger consistent LBT failure for active UL BWP on the serving cell;
>>> 3> trigger consistent LBT failure for active SL BWP on the serving cell;
>>> 3> if the serving cell is a SpCell:

>>>> 4> if consistent LBT failure is triggered on all UL BWPs set to PRACH opportunities on the same carrier of the serving cell; or
>>>> 4> if a consistent LBT failure is triggered on the corresponding SL BWP and a PRACH occasion is configured on the UL BWP of the same carrier as the SL BWP in the corresponding serving cell:

>>>>> 5> indicate the consistent LBT failure to the higher layer (i.e., RRC layer).

>>>> 4> else:

>>>>> 5> stop the ongoing random access procedure on the serving cell;
>>>>> 5> switch the active UL BWP to the (target) UL BWP on the same carrier of the serving cell that is configured with a PRACH occasion and for which no consistent LBT failure has been triggered;
>>>>> 5> switch the active SL BWP to the (target) SL BWP on the same carrier of the serving cell that is configured with a PRACH occasion and for which no consistent LBT failure has been triggered, wherein the target SL BWP is associated with or overlaps the target UL BWP.

5> initiate the random access procedure.

1> if all triggered consistent LBT failures are canceled on the serving cell; or
1> if lbt-FailureDetectionTimer expires; or
1> If lbt-FailureDetectionTimer or lbt-FailureInstanceMaxCount is reconfigured by a higher layer:

2> set LBT_COUNTER to 0.

The MAC entity of the UE shall:

1> if a consistent LBT failure is triggered and not canceled in SpCell; and
1> if UL-SCH resources are available for a new transmission in SpCell and the UL-SCH resources may accommodate an LBT failure MAC CE and its subheaders as a result of logical channel priorities:

2> indicate the multiplexing and assembly procedure to generate an LBT failure MAC CE.

1> if a consistent LBT failure is triggered and not canceled on at least one SCell:

2> if UL-SCH resources are available for new transmission in a serving cell where consistent LBT failure has not been triggered and the UL-SCH resources can accommodate the LBT failure MAC CE and its subheaders as a result of logical channel priority:

3> indicate the multiplexing and assembly procedure to generate an LBT failure MAC CE.

2> else:

3> trigger scheduling request for LBT failure MAC CE.

1> when a MAC PDU is transmitted and no LBT failure indication is received from a lower layer and the PDU contains an LBT failure MAC CE:

2> cancel all consistent LBT failure(s) triggered on SCell(s) indicated by the transmitted LBT failure MAC CE.

1> if a consistent LBT failure is triggered and not cancelled in SpCell; and
1> if a random access procedure is considered to have completed successfully in SpCell:

2> cancel all consistent LBT errors triggered in SpCell.

1> if lbt-FailureRecoveryConfig is reconfigured by the upper layer for the serving cell:

2> cancel all consistent LBT failures triggered on that serving cell.

Embodiment 1-1

Embodiment 1-1 relates to LBT failure MAC CE for Embodiment 1.

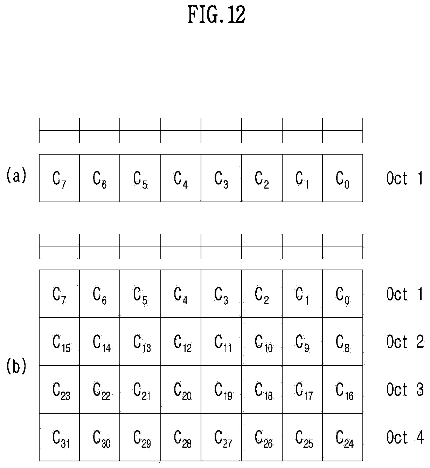

A one-octet LBT failure MAC CE may be identified by a MAC subheader having a specific LCID (e.g., an LCID mapped to index/codepoint 43 or/and 49). As illustrated in (a) of FIG. 12, the size of a one-octet LBT failure MAC CE is fixed and may consist of a single octet including eight C fields.
A 4-octet LBT failure MAC CE may be identified by a MAC subheader having a specific LCID (e.g., an LCID mapped to index/codepoint 42 or/and 48). As illustrated in (b) of FIG. 12, the size of a 4-octet LBT failure MAC CE is fixed and may consist of 4 octets containing 32 C fields.
If the highest 'ServCellIndex' of the serving cell of the MAC entity where the LBT failure was detected is less than 8, the single octet format is used, otherwise the four octet format may be used.
If there is a serving cell configured for a MAC entity with 'ServCellIndex' i in (a) and (b) of FIG. 12, and a consistent LBT failure is triggered across UL and SL and the consistent LBT failure is not canceled on that serving cell, $C_i$ may be set to 1. Otherwise, $C_i$ may be set to 0.

Embodiment 2: SL Specific LBT Failure Detection and Recovery Procedure

That is, Embodiment 2 relates to a separate LBT failure detection and recovery procedures for SL LBT failure and UL LBT failure, and possibly the interaction between SL LBT failure and UL LBT failure.

The UE may separately count the existing LBT_COUNTER based on LBT failures for UL transmissions in the UL BWP and the new LBT_COUNTER_SL based on LBT failures for SL transmissions in the SL BWP for each serving cell.

The existing LBT failure MAC CE and the new LBT failure MAC CE may be generated separately for LBT failure of UL and LBT failure of SL, respectively. SR for UL LBT failure and SR for SL LBT failure may be triggered separately. SR configuration and resources may be separately configured and allocated for UL LBT failure and SL LBT failure reporting.

Parameters of 'lbt-FailureRecoveryConfig' (e.g., 'lbt-FailureInstanceMaxCount' and 'lbt-FailureDetectionTimer') may be individually configured via RRC for UL LBT failure and SL LBT failure respectively.

Additionally or alternatively, as embodiment 2, the existing LBT failure MAC CE may be reused for SL LBT fault reporting and UL LBT failure reporting. That is, the same MAC CE format may be used to indicate SL LBT failure or UL LBT failure based on different LC (logical channel)ID values.

Parameters in 'lbt-FailureRecoveryConfig' (e.g., 'lbt-FailureInstanceMaxCount' and 'lbt-FailureDetectionTimer') may be reused for SL LBT failure detection and UL LBT failure detection. That is, 'lbt-FailureInstanceMaxCount' or 'lbt-FailureDetectionTimer' may operate based on the configuration of the same corresponding parameter in 'lbt-FailureRecoveryConfig'.

Here, the SR configurations and resources may be common to both UL LBT failure reporting and SL LBT failure reporting.

Since the BWP may be composed of one or more RB sets (i.e., 20 mHz LBT bandwidth) on which the UE performs LBT, the UE may perform LBT failure detection and recovery procedures for SL or UL specific RB sets instead of SL BWP or UL BWP. In this case, the BWP may be replaced with the RB set in each embodiment.

The MAC entity of the UE may be configured by RRC with a consistent LBT failure recovery procedure. Consistent LBT failures per UL BWP, per SL BWP, or per BWP overlapping a UL BWP and an SL BWP may be detected by counting LBT failure indications for all UL transmissions or all SL transmissions from lower layers to the MAC entity.

RRC may configure the following parameters in 'lbt-FailureRecoveryConfig' for UL LBT failure detection.

- lbt-FailureInstanceMaxCount for consistent LBT failure detection in UL
- lbt-FailureDetectionTimer for consistent LBT failure detection in UL

RRC may configure the following parameters in 'lbt-FailureRecoveryConfigSL' to detect SL LBT failure.

- 'lbt-FailureInstanceMaxCountSL' for consistent LBT failure detection in SL
- 'lbt-FailureDetectionTimerSL' for consistent LBT error detection in SL

The following UE parameters may be used for a consistent LBT failure detection procedure for UL LBT failure.

- LBT_COUNTER (per serving cell): Counter for LBT failure indications, initially set to 0 for UL.

The following UE parameters may be used for a consistent LBT failure detection procedure for SL LBT failures.

- LBT_COUNTER_SL (per serving cell): Counter for LBT failure indication, initially set to 0 for SL.

For each activated serving cell set to 'lbt-FailureRecoveryConfig', the MAC entity of the UE may detect a UL LBT failure:

1> if an LBT failure indication is received from a lower layer for UL transmission:

2> start or restart lbt-FailureDetectionTimer;
2> increment LBT_COUNTER by 1;
2> if LBT_COUNTER >= lbt-FailureInstanceMaxCount:

3> trigger consistent LBT failure for active UL BWP on the serving cell;
3> if the serving cell is a SpCell:

4> if consistent LBT failure is triggered in all UL BWPs configured as PRACH occasions on the same carrier of the serving cell:

5> indicate consistent LBT failure to the upper layer (i.e. RRC layer).

4> else:

5> stop the ongoing random access procedure on the serving cell;
5> switch the active UL BWP to the (target) UL BWP on the same carrier of the serving cell that is configured with a PRACH occasion and for which no consistent LBT failure is triggered;
5> switch the active SL BWP to the (target) SL BWP on the same carrier of the serving cell that is not triggered to a consistent LBT failure, wherein the target SL BWP is associated with or overlaps the target UL BWP;
5> initiate the random access procedure.

1> if LBT_COUNTER_SL is set to 0 for an SL LBT failure; or
1> if all consistent LBT failures triggered in an SL transfer are canceled on the serving cell; or
1> if lbt-FailureDetectionTimerSL expires; or
1> if lbt-FailureDetectionTimerSL or lbt-FailureInstanceMaxCountSL is reconfigured by an upper layer; or
1> if all consistent LBT failures triggered are canceled on the serving cell; or
1> if lbt-FailureDetectionTimer expires; or
1> if lbt-FailureDetectionTimer or lbt-FailureInstanceMaxCount is reconfigured by an upper layer:

2> Set LBT_COUNTER to 0.
for each activated serving cell configured with lbt-FailureRecoveryConfigSL, the MAC entity of the UE may detect SL LBT failures.

1> if an LBT failure indication is received from a lower layer for SL transmission:

2> start or restart lbt-FailureDetectionTimerSL;
2> increment LBT_COUNTER_SL by 1;
2> if LBT_COUNTER_SL >= lbt-FailureInstanceMaxCountSL:

3> trigger consistent LBT failure for active SL BWP on the serving cell;
3> if the serving cell is a SpCell:

4> if consistent LBT failure is triggered on all SL BWPs and PRACH triggering is configured on UL BWP of the same carrier as the SL BWP in that serving cell:

5> indicates a consistent LBT failure to the upper layer (i.e., RRC layer).

4> else;

5> stop any random access procedure in progress in the serving cell;
5> switch the active SL BWP to the (target) SL BWP on the same carrier of the serving cell where the UL BWP is configured with a PRACH occasion and no consistent LBT failure is triggered in UL or SL.
5> switch the active UL BWP to the (target) UL BWP on the same carrier of the serving cell where no consistent LBT failure is triggered, wherein the target UL BWP is associated with or overlaps the target SL BWP;
5> initiating a random access procedure.

1> if LBT_COUNTER is set to 0 for a UL LBT failure; or
1> if lbt-FailureDetectionTimer expires for a UL LBT failure; or
1> if lbt-FailureDetectionTimer or lbt-FailureInstanceMaxCount is reconfigured by upper layers on UL LBT failure;
1> if all consistent LBT failures triggered in a UL transmission are canceled on the serving cell; or
1> if all consistent LBT failures triggered in a SL transmission are canceled on the serving cell; or
1> if lbt-FailureDetectionTimerSL expires; or
1> if lbt-FailureDetectionTimerSL or lbt-FailureInstanceMaxCountSL is reconfigured by an upper layer:

2> Set LBT_COUNTER_SL to 0.

For reporting a UL LBT failure, the MAC entity of the terminal may perform the following actions:

1> If a consistent LBT failure in the SpCell is triggered and not cancelled for UL; and
1> If UL-SCH resources are available for new transmission in the SpCell and these UL-SCH resources may accommodate the LBT failure MAC CE and its subheaders as a result of logical channel priorities:

    2> indicate the multiplexing and assembly procedure to generate an LBT failure MAC CE.

1> if a consistent LBT failure on at least one SCell is triggered for UL and not cancelled:

    2> If UL-SCH resources are available for a new transmission in a serving cell where consistent LBT failures for UL or SL have not been triggered, and if those UL-SCH resources may accommodate the LBT failure MAC CE and its subheaders as a result of logical channel prioritization:

        3> indicate the multiplexing and assembly procedure to generate a LBT failure MAC CE.

    2> else:

        3> trigger scheduling request for LBT failure MAC CE.

1> when a MAC PDU is transmitted and no LBT failure indication is received from a lower layer and the PDU includes an LBT failure MAC CE:

    2> cancel all consistent LBT failure(s) triggered on SCell(s) that indicated consistent LBT failure in transmitted LBT failure MAC CE.

1> if a consistent LBT failure is triggered for UL and is not canceled in SpCell; and
1> if a random access procedure is considered to have completed successfully in SpCell:

    2> (Alt 1-1) cancel all consistent LBT failures triggered on UL except SL in SpCell.
    2> (Alt 1-2) cancel all consistent LBT failures triggered on both UL and SL in SpCell.

1> if lbt-FailureRecoveryConfig is reconfigured by upper layers for the serving cell:

    2> cancel all consistent LBT failures triggered for ULs on that serving cell.
    2> Cancel all consistent LBT failures triggered for SLs on that serving cell.

For reporting SL LBT failure, the MAC entity of the terminal may perform the following actions:

1> if a consistent LBT failure in the SpCell is triggered for the SL and has not been cancelled; and
1> if UL-SCH resources are available for new transmission in the SpCell and the UL-SCH resources may accommodate the SL LBT failure MAC CE and its subheader as a result of logical channel prioritization:

    2> indicate the multiplexing and assembly procedure to generate a SL LBT failure MAC CE

1> if a consistent LBT failure has been triggered for the SL on at least one SCell and has not been cancelled:

    2> if UL-SCH resources are available for new transmission in the serving cell where a consistent LBT failure has not been triggered for the UL or SL, and the UL-SCH resources may accommodate the SL LBT failure MAC CE and its subheaders as a result of logical channel prioritization;

        3> indicate the multiplexing and assembly procedure to generate a SL LBT failure MAC CE.

    2> else:

        3> trigger scheduling request for SL LBT failure MAC CE.

1> If a MAC PDU is transmitted and no SL LBT failure indication is received from the lower layer and the PDU includes a SL LBT failure MAC CE:

>> 2> Cancel all consistent LBT failure(s) triggered on SCell(s) that indicated consistent LBT failure in transmitted LBT failure MAC CE.

> 1> if a consistent LBT failure is triggered for SL and is not canceled in SpCell; and
> 1> if the Random Access procedure is considered to have completed successfully in SpCell:

>> 2> (Alt 2-1) cancel all consistent LBT failures triggered for SL except UL in SpCell.
>> 2> (Alt 2-2) cancel all consistent LBT failures triggered for both UL and SL in SpCell.

> 1> if lbt-FailureRecoveryConfigSL is reconfigured by the upper layer for the serving cell:

>> 2> cancel all consistent LBT failures triggered for SLs on that serving cell
>> 2> cancel all consistent LBT failures triggered for ULs on that serving cell

Embodiment 2-1

Embodiment 2-1 relates to LBT failure MAC CE and SL LBT failure MAC CE for Embodiment 1.

One octet LBT failure MAC CE and SL LBT failure MAC CE may be identified by a MAC subheader with a specific LCID. As illustrated in (a) of FIG. 12, the size of one octet LBT failure MAC CE is fixed and may be composed of a single octet including eight C fields.

4-octet LBT failure MAC CE and SL LBT failure MAC CE may be identified by a MAC subheader with a specific LCID. As shown in (b) of Fig. 12, the size of the 4-octet LBT failure MAC CE is fixed and can be composed of 4 octets including 32 C fields.

The UCID value for UL-SCH may be defined as shown in Table 10 below.

[Table 10]

| Codepoint/Index | LCID value |
| --- | --- |
| 42 | SL LBT failure (4 Octet) |
| 43 | SL LBT failure (1 Octet) |
| 48 | UL LBT failure (4 Octet) |
| 49 | UL LBT failure (1 Octet) |

If the highest 'ServCellIndex' of the serving cell of the MAC entity where the LBT failure is detected is less than 8, the single octet format is used, otherwise the four octet format may be used. In (a) and (b) of FIG. 12, if there is a serving cell configured for the MAC entity with 'ServCellIndex' i and a consistent LBT failure is triggered across UL and SL and the consistent LBT failure is not canceled in that serving cell, $C_i$ may be set to 1. Otherwise, $C_i$ may be set to 0.

Whether embodiment 1 or embodiment 2 is used may depend on the SL mode or the serving cell where SL transmission is performed. For example, embodiment 1 may be used in SL mode 1, and embodiment 2 may be used in SL mode 2. Embodiment 1 may be used in a serving cell where both UL and SL transmissions are allowed, and embodiment 2 may be used in a serving cell. In this case, only SL transmission may be allowed, and UL transmission may not be allowed.

When the UE triggers a scheduling request for LBT failure MAC CE or SL LBT failure MAC CE according to one of the embodiments described above, the UE may transmit a PUCCH allocated for SR or trigger a RACH.

Upon receiving an SR or RACH transmission, the base station may allocate a UL grant, i.e., UL-SCH resource, to the UE. If the UL-SCH resource is available for a new transmission of the SpCell and the UL-SCH resource can accommodate the corresponding subheader as a result of the LBT failure MAC CE or SL LBT failure MAC CE and logical channel prioritization, the UE may indicate the multiplexing and assembly procedure to generate the LBT failure MAC CE or SL LBT failure MAC CE as described in one of the embodiments described above.

Accordingly, the UE may transmit an LBT failure MAC CE or SL LBT failure MAC CE to the base station in UL using UL-SCH resources.

Upon receiving either SR and/or MAC CE, the base station may perform one of the alternatives described below.

Alternative A: The existing SL resource pool where consecutive LBT failures are detected can be replaced with a new SL resource pool for SL transmission.

For example, the previous SL resource pool in which the LBT failure was reported in the aforementioned step may be changed to a new SL resource pool in RRC reset.

Additionally or alternatively, the base station may indicate a new SL resource pool via DCI format 3_0, DCI format 3_x, or DL MAC CE. The UE receiving the indication may change the existing SL resource pool to the new SL resource pool.

Here, DCI format 3_0 or DCI format 3_x may include an SL resource pool index set for a new SL resource pool. Different SL resource pools of a cell may be configured with different SL resource pool indices unique to the cell or UE.

Additionally or alternatively, the UE may autonomously change the old SL resource pool to the new SL resource pool immediately after SR, RACH transmission or MAC CE transmission or immediately after detection of consecutive LBT failures.

The new SL resource pool may be the default SL resource pool configured by the base station or the SL resource pool of the initial SL BWP associated with the initial UL BWP.

Alternative B: Existing SL BWPs where consecutive LBT failures are detected may be changed to new SL BWPs for SL transmission.

For example, a previous SL BWP for which an LBT failure was reported in the above-described steps may be changed to a new SL BWP in RRC reconfiguration.

Additionally or alternatively, the base station may indicate a new SL BWP via DCI format 3_0, DCI format 3_x or DL MAC CE. A terminal receiving the indication may change the previous SL BWP to the new SL BWP.

DCI format 3_0 or 3_x may include an SL BWP indicator set for a new SL BWP. Different SL BWPs in a cell may be configured with different SL BWP indicator values that are unique to the cell or UE.

Additionally or alternatively, the UE may autonomously change the previous SL BWP to a new SL BWP immediately after an SR, RACH transmission or a MAC CE transmission or immediately after detection of consecutive LBT failures.

Here, the new SL BWP may be either the default SL BWP configured by the base station or the SL BWP linked to the initial UL BWP.

Alternative C: The existing RB set in which consecutive LBT failures are detected may be changed to a new RB set for SL transmission.

For example, a previous SL RB set for which LBT failure was reported in the aforementioned step may be changed to a new SL RB set in RRC reconfiguration.

Additionally or alternatively, the base station may indicate a new SL RB set via DCI format 3_0, DCI format 3_x or DL MAC CE. The terminal receiving the indication may change the previous SL RB set to the new SL RB set.

DCI format 3_0 or DCI format 3_x may include an RB set index configured for a new SL RB set. Different RB sets of a cell may be configured with different RB set indices that are unique to the cell or UE.

Additionally or alternatively, the UE may autonomously change the previous SL RB set to a new SL RB set immediately after an SR, RACH transmission or a MAC CE transmission or immediately after detection of consecutive LBT failures.

The new SL RB set may be the default SL RB set configured by the base station or the SL RB set of the initial SL BWP associated with the initial UL BWP.

Alternative D: An existing cell that detects consecutive LBT failures for SL transmission can be changed to a new cell.

For example, the previous cell where the LBT failure was reported in the aforementioned step may be changed to a new cell in RRC reconfiguration.

Additionally or alternatively, the base station may indicate a new cell via DCI format 3_0, DCI format 3_x or DL MAC CE. The terminal receiving the indication may change the existing cell to the new cell.

DCI format 3_0 or 3_x may include a cell index set for a new cell.

Additionally or alternatively, the UE may autonomously change the existing cell to a new cell immediately after SR, RACH transmission or MAC CE transmission or immediately after detection of consecutive LBT failures. Here, the new cell may be the default cell configured by the base station or the cell of the initial SL BWP associated with the initial UL BWP.

In the alternatives described above, 'lbt-FailureInstanceMaxCount' for consistent LBT failure detection may be configured with different values for different alternatives.

Additionally or alternatively, 'lbt-FailureDetectionTimer' for consistent LBT failure detection may be configured with different values for different alternatives.

For example, the base station may configure different 'lbt-FailureInstanceMaxCount' values for different alternatives. For example, the 'lbt-FailureInstanceMaxCount' value for Alternative A may be lower than the 'lbt-FailureInstanceMaxCount' value for Alternative B.

Alternatively, the base station may configure different 'lbt-FailureDetectionTimer' values for different alternatives such that the 'lbt-FailureDetectionTimer' value for Alternative D may be lower than the 'lbt-FailureDetectionTimer' value for Alternative B.

'lbt-FailureInstanceMaxCount' for consistent LBT failure detection and 'lbt-FailureDetectionTimer' for consistent LBT failure detection may be configured with different values for SL mode 1 (i.e., SL resource allocation mode 1) and SL mode 2 (i.e., SL resource allocation mode 2) respectively.

For SL mode 1, the parameters described above may be used for SR reporting. For SL mode 2, the parameters described above may be used for resource reselection. Additionally or alternatively, SR may be triggered due to consistent LBT errors in the steps described above for both SL mode 1 and SL mode 2.

The UE may detect a collision between a PUCCH transmission and a sidelink transmission for a triggered SR (S1050).

A UE may prioritize PUCCH transmission for SR over sidelink transmission if the following conditions are satisfied (S1060).

- If the PUCCH resource for SR transmission does not overlap with the PUSCH duration of the uplink grant or MSGA payload received in the random access response; and
- If the physical layer may signal the SR on one valid PUCCH resource for the SR; and
- If the SL-SCH resource overlaps with the PUCCH resource for the SR transmission opportunity for the pending SR triggered for the LBT failure MAC CE or the SL LBT failure MAC CE, and the MAC entity cannot perform the SR transmission simultaneously with the transmission of the SL-SCH resource,

The UE may prioritize PUCCH transmission for SR over sidelink transmission according to the method described below.

- When consistent LBT failure is triggered for UL and SL LBT failures on the first cell/carrier and sidelink transmission occurs on the second cell/carrier, the UE may prioritize PUCCH transmission for SR over sidelink transmission.
- When consistent LBT failure is triggered for UL LBT failure on the first cell/carrier and sidelink transmission occurs on the first cell/carrier, the UE may prioritize PUCCH transmission for SR over sidelink transmission.
- When consistent LBT failure is triggered for SL LBT failure on the first cell/carrier and sidelink transmission occurs on the first cell/carrier, the UE may prioritize PUCCH transmission for SR over sidelink transmission.

Additionally or alternatively, the base station may indicate the UE whether SR triggered for LBT failure may be prioritized over sidelink transmissions.

A UE may lower the priority of PUCCH transmissions for other SRs over sidelink transmissions if the SR is not triggered for LBT failure MAC CE or SL LBT failure MAC CE.

If the UE prioritizes PUCCH transmission for SR over sidelink transmission, the UE may drop the sidelink transmission. And, if the sidelink transmission does not collide with any SR, the UE may perform the sidelink transmission using either the reserved resources or the received resources.

As illustrated in FIG. 10, when the UE performs SR PUCCH transmission to the base station at step S1070, the base station may transmit a CRC scrambled PDCCH with a C-RNTI for a UL grant to the UE, and the UE may transmit a (SL) LBT failure MAC CE to the base station.

The base station may transmit a PDCCH including a new cell index, SL BWP indicator, etc. to the UE as described above (S1075). The UE may change the SL BWP or cell based on the PDCCH (S1080). The base station may transmit a PDCCH CRC scrambled by SL-RNTI or SLCS-RNTI to the terminal (S1085). The UE may perform PSCCH/PSCCH transmission with the receiving UE based on the PDCCH (S1090).

Additionally or alternatively, the UE may prioritize the PUSCH carrying the LBT failure MAC CE or the SL LBT failure MAC CE in the logical channel prioritization of the MAC entity for transmitting the MAC CE in the MAC PDU in the uplink as described below.

- The LBT failure MAC CE used for UL LBT failure reporting may have a higher priority than the SL LBT failure MAC CE in logical channel prioritization as follows.
- In logical channel prioritization of UL-SCH transmission, logical channels may be prioritized in the following order. That is, the priority may be higher in the order listed first.

    -- Data of C-RNTI MAC CE or UL-CCCH;
    -- Configured grant confirmation MAC CE or MAC CE for BFR or multiple entry configured grant confirmation MAC CE;
    -- MAC CE for sidelink setup grant confirmation;
    -- MAC CE for LBT failure;
    -- MAC CE for SL LBT failure (Example 1);

-- MAC CE for timing advance reporting;
-- MAC CE for SL LBT failure (Example 2);

- MAC CE for SL-BSR prioritized based on predefined criteria;

-- MAC CE for BSR, excluding BSR included for padding;

- Single-entry PHR MAC CE or multi-entry PHR MAC CE;
- MAC CE for the number of desired guard symbols;
- MAC CE for pre-emptive BSR;
- MAC CE for SL-BSR, excluding SL-BSR included for padding and SL-BSR prioritized according to predefined criteria;
- Data of all logical channels, excluding data of UL-CCCH
- MAC CE for recommended bit rate query;
- MAC CE for BSR included for padding;
- MAC CE for SL-BSR included for padding.
- The MAC entity may prioritize MAC CEs listed higher in order than 'data on all logical channels except data on UL-CCCH' over transmission of NR sidelink communications.

A UE may prioritize a PUSCH carrying a MAC PDU containing an LBT failure MAC CE or a SL LBT failure MAC CE over sidelink transmission.

In the above description, sidelink transmission, grant and resource may be replaced with uplink transmission, grant and resource. In particular, when a base station allocates an SL grant to a UE performing SL transmission in an unlicensed band, the UE can report consistent LBT failure for SL transmission to the base station according to the present disclosure.

General Device to which the Present Disclosure may be applied

FIG. 13 illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs (Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned.

Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1.    A method performed by a first user equipment (UE) in a wireless communication system, the method comprising:

receiving configuration information related to at least one resource block (RB) set for sidelink (SL) transmission from a base station; and
based on a consistent SL LBT (listen before talk) failure being detected for a specific RB set among the at least one RB set, transmitting a MAC (medium access control) CE (control element) related to the consistent SL LBT failure to the base station,
wherein the MAC CE includes information indicating that the consistent SL LBT failure was detected for the specific RB set.

2. The method of claim 1, wherein:
the MAC CE includes information indicating at least one of cells or SL BWP (bandwidth part) in which the consistent SL LBT failure was detected.

3. The method of claim 1, wherein:
an logical channel identity (LCID) corresponding to a sub-header of a MAC PDU (protocol data unit) including the MAC CE associated with the consistent SL LBT failure is different from a LCID value corresponding to a sub-header of a MAC PDU including the MAC CE associated with a LBT failure in an uplink.

4. The method of claim 1, wherein:
based on a SL resource allocation mode 1 being configured for the UE:
based on the consistent SL LBT failure being detected for the specific RB set among at least one of the RB sets, a physical uplink control channel (PUCCH) including SL HARQ-ACK information indicating a negative acknowledgement (NACK) and information indicating that the NACK was generated by the consistent SL LBT is transmitted to the base station.

5. The method of claim 1, wherein:

an RRC (radio resource control) reconfiguration message for configuring a new RB set is received from the base station, and
a RB set for SL communication is changed from the specific RB set to the new RB set by the first UE.

6. The method of claim 1, wherein:
based on DCI (downlink control information) or downlink (DL) MAC CE indicating a new RB set being received from the base station, a RB set for SL communication is changed from the specific RB set to the new RB set by the first UE.

7. The method of claim 1, wherein:
a RB set for SL communication is changed by the first UE from the specific RB set to a default RB set configured by the base station or a SL RB set of an initial SL BWP associated with an initial UL BWP.

8. The method of claim 4, wherein:
based on the PUCCH and SL transmission colliding, the SL transmission is dropped and the PUCCH is transmitted to the base station.

9. The method of claim 1, wherein:
based on a SR (scheduling request) for the MAC CE being triggered, a PUCCH allocated for the SR is transmitted to the base station.

10. A first user equipment (UE) in a wireless communication system, the first UE comprising:

at least one transceiver; and
at least one processor connected to the at least one transceiver,
wherein the at least one processor is configured to:

receive configuration information related to at least one resource block (RB) set for sidelink (SL) transmission from a base station through the at least one transceiver; and
based on a consistent SL LBT (listen before talk) failure being detected for a specific RB set among the at least one RB set, transmit a MAC (medium access control) CE (control element) related to the consistent SL LBT failure to the base station through the at least one transceiver,
wherein the MAC CE includes information indicating that the consistent SL LBT failure was detected for the specific RB set.

11. A method performed by a base station in a wireless communication system, the method comprising:

transmitting configuration information related to at least one resource block (RB) set for sidelink (SL) transmission to a first user equipment (UE); and

based on a consistent SL LBT (listen before talk) failure being detected for a specific RB set among the at least one RB set, receiving a MAC (medium access control) CE (control element) related to the consistent SL LBT failure from the first UE,

wherein the MAC CE includes information indicating that the consistent SL LBT failure was detected for the specific RB set.

12. A base station in a wireless communication, the base station comprising:

at least one transceiver; and
at least one processor connected to the at least one transceiver,
wherein the at least one processor is configured to:

transmit configuration information related to at least one resource block (RB) set for sidelink (SL) transmission to a first user equipment (UE) through the at least one transceiver; and
based on a consistent SL LBT (listen before talk) failure being detected for a specific RB set among the at least one RB set, receive a MAC (medium access control) CE (control element) related to the consistent SL LBT failure from the first UE through the at least one transceiver,
wherein the MAC CE includes information indicating that the consistent SL LBT failure was detected for the specific RB set.

13. A processing device configured to control a first user equipment (UE) in a wireless communication system, the processing device comprising:

at least one processor; and
at least one computer memory operatively coupled to the at least one processor and storing instructions for performing operations upon being executed by the at least one processor;
the operations include:

receiving configuration information related to at least one resource block (RB) set for sidelink (SL) transmission from a base station; and
based on a consistent SL LBT (listen before talk) failure being detected for a specific RB set among the at least one RB set, transmitting a MAC (medium access control) CE (control element) related to the consistent SL LBT failure to the base station,
wherein the MAC CE includes information indicating that the consistent SL LBT failure was detected for the specific RB set.

14. At least one non-transitory computer readable medium storing at least one instruction,
based on the at least one instruction being executed by at least one processor, an apparatus in a wireless communication system controls to:

receive configuration information related to at least one resource block (RB) set for sidelink (SL) transmission from a base station; and
based on a consistent SL LBT (listen before talk) failure being detected for a specific RB set among the at least one RB set, transmit a MAC (medium access control) CE (control element) related to the consistent SL LBT failure to the base station,
wherein the MAC CE includes information indicating that the consistent SL LBT failure was detected for the specific RB set.

# FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers,i.e.,275 RBs)

A BWP

1 RB=12 subcarrier

1 RE

1 subcarrier

1 Symbol

k=0

l=0 ·····

# FIG.6

INITIAL CELL SEARCH
SYSTEM INFORMATION RECEPTION
RANDOM ACCESS PROCEDURE
GENERAL DL/UL Tx/Rx

PSS/SSS& [DLRS]& PBCH
PDCCH/ PDSCH (BCCH)
PRACH
PDCCH/ PDSCH
PUSCH
PDCCH/ PDSCH
PDCCH/ PDSCH
PUSCH/ PUCCH

S601    S602    S603    S604    S605    S606    S607    S608

· DL/UL ACK/NACK
· UE CQI/PMI RI REPORT USING PUSCH AND PUCCH

# FIG.7

| BASE STATION | FIRST UE | SECOND UE |
|---|---|---|

S8000 — RESOURCE SCHEDULING

PSCCH — S8010

PSSCH — S8020

PSFCH — S8030

S8040 — PUCCH/PUSCH

(a)

| FIRST UE | SECOND UE |
|---|---|

PSCCH — S8010

PSSCH — S8020

PSFCH — S8030

(b)

# FIG.8

(a)　　　　　(b)　　　　　(c)

● : TRANSMITTING UE

⌀ : RECEIVING UE

## FIG.9

RECEIVING CONFIGURATION INFORMATION RELATED TO AT LEAST ONE RB SET FOR SL TRANSMISSION FROM A BASE STATION ~ S910

BASED ON A CONSISTENT SL LBT FAILURE BEING DETECTED FOR A SPECIFIC RB SET AMONG AT LEAST ONE RB SET, TRANSMITTING A MAC CE RELATED TO THE CONSISTENT SL LBT FAILURE TO THE BASE STATION ~ S920

## FIG.10

TRANSMITTING CONFIGURATION INFORMATION RELATED TO AT LEAST ONE RESOURCE BLOCK RB SET FOR SL TRANSMISSION TO THE FIRST UE ~ S1010

BASED ON A CONSISTENT SL LBT FAILURE BEING DETECTED FOR A SPECIFIC RB SET AMONG AT LEAST ONE RB SET, RECEIVING A MAC CE RELATED TO THE CONSISTENT SL LBT FAILURE FROM THE FIRST UE ~ S1020

# FIG.11

RX UE — TX UE — gNB

RRC Reconfiguration
(PUCCH resources for LBT failures) — S1010

S1020 — Sidelink resource reservation
S1030
PDCCH with SL-RNTI or SLCS-RNTI

S1040
- Detect LBT failures
- Trigger consistent LBT failures
- Trigger SR

Detect collision — S1050

Prioritize SR over SL — S1060

SR PUCCH transmission
Drop PSCCH/PSSCH transmission
PDCCH with C-RNTI for UL Gnt — S1070
SL) LBT Failure MAC CE

PDCCH indicating cell index
or SL BWP indicator — S1075

S1080 — SL BWP change or cell change

PDCCH with SL-RNTI or SLCS-RNTI — S1085
PSCCH/PSSCH transmission
S1090

EP 4 518 532 A1

# FIG.12

(a)

| $C_7$ | $C_6$ | $C_5$ | $C_4$ | $C_3$ | $C_2$ | $C_1$ | $C_0$ | Oct 1 |
|---|---|---|---|---|---|---|---|---|

(b)

| $C_7$ | $C_6$ | $C_5$ | $C_4$ | $C_3$ | $C_2$ | $C_1$ | $C_0$ | Oct 1 |
|---|---|---|---|---|---|---|---|---|
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |

FIG.13

<div align="center">

**INTERNATIONAL SEARCH REPORT**

</div>

| International application No. |
|---|
| **PCT/KR2023/005709** |

**A. CLASSIFICATION OF SUBJECT MATTER**

**H04W 72/25**(2023.01)i; **H04W 72/21**(2023.01)i; **H04W 72/231**(2023.01)i; **H04W 72/232**(2023.01)i; **H04W 72/0457**(2023.01)i; **H04W 74/08**(2009.01)i; **H04L 1/18**(2006.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 72/25(2023.01); H04W 36/00(2009.01); H04W 72/04(2009.01); H04W 72/12(2009.01); H04W 74/00(2009.01); H04W 74/08(2009.01); H04W 76/18(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 자원 블록(resource block), 일관된(consistent), SL(sidelink) LBT(listen before talk), 실패(failure), MAC(medium access control) CE(control element)

**C. DOCUMENTS CONSIDERED TO BE RELEVANT**

| Category* | Citation of document, with indication, where appropriate, of the relevant passages | Relevant to claim No. |
|---|---|---|
| A | WO 2021-126402 A1 (QUALCOMM INCORPORATED) 24 June 2021 (2021-06-24)<br>See paragraphs [0062]-[0070]; and figure 3. | 1-14 |
| A | WO 2021-013256 A1 (FG INNOVATION COMPANY LIMITED) 28 January 2021 (2021-01-28)<br>See paragraphs [0126]-[0140]; and figures 1-4. | 1-14 |
| A | WO 2021-215679 A1 (LG ELECTRONICS INC.) 28 October 2021 (2021-10-28)<br>See paragraphs [0076]-[0256]; and figures 1-12. | 1-14 |
| A | WO 2020-198584 A1 (APPLE INC.) 01 October 2020 (2020-10-01)<br>See paragraphs [0058]-[0415]; and figures 1A-21. | 1-14 |
| A | NTT DOCOMO, INC. Discussion on sidelink resource allocation for power saving. R1-2109699, 3GPP TSG RAN WG1 #106bis-e. 01 October 2021.<br>See sections 1-2.7. | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005709**

| Patent document cited in search report | | | Publication date (day/month/year) | Patent family member(s) | | | Publication date (day/month/year) |
|---|---|---|---|---|---|---|---|
| WO | 2021-126402 | A1 | 24 June 2021 | BR | 112022011302 | A2 | 06 September 2022 |
| | | | | CN | 114788377 | A | 22 July 2022 |
| | | | | EP | 4079065 | A1 | 26 October 2022 |
| | | | | KR | 10-2022-0117870 | A | 24 August 2022 |
| | | | | TW | 202127951 | A | 16 July 2021 |
| | | | | US | 11576211 | B2 | 07 February 2023 |
| | | | | US | 2021-0195649 | A1 | 24 June 2021 |
| WO | 2021-013256 | A1 | 28 January 2021 | CN | 114600502 | A | 07 June 2022 |
| | | | | EP | 4005278 | A1 | 01 June 2022 |
| | | | | US | 11627624 | B2 | 11 April 2023 |
| | | | | US | 2021-0029768 | A1 | 28 January 2021 |
| WO | 2021-215679 | A1 | 28 October 2021 | | None | | |
| WO | 2020-198584 | A1 | 01 October 2020 | US | 2022-0022252 | A1 | 20 January 2022 |

Form PCT/ISA/210 (patent family annex) (July 2022)